# EUROPEAN PATENT APPLICATION

(11) **EP 1 357 147 A1**
(43) Date of publication of application: **29.10.2003**
(21) Application number: 03101084.6
(22) Date of filing: 18.04.2003
(51) Int. Cl.: C08K 5/10, C08K 5/101, B29D 30/00, B29D 30/72, B60C 1/00, B60C 13/00

(54) **TIRE WITH COMPONENT OF CARBON BLACK RICH RUBBER COMPOSITION WHICH CONTAINS ESTER OF POLYHYDROXY ALCOHOL**

(30) Priority: 26.04.2002 US 133546
(71) Applicant: THE GOODYEAR TIRE & RUBBER COMPANY, Akron, Ohio 44316-0001 (US)
(72) Inventor: SANDSTROM, Paul Harry, 44223, Cuyahoga Falls (US)
(74) Representative: Kutsch, Bernd

(57) **Abstract**

A pneumatic rubber tire having at least one visually exposed component comprised of a carbon black reinforced rubber composition which is exclusive of silica particularly synthetic amorphous silica, synthetic organo-silica material and silica coupler particularly organosilane polysulfide based silica coupler and contains a significant amount of at least one ester of a polyhydroxy alcohol, including ethoxylated esters thereof. Such tire component particularly including a film thereof on the visually observable outer surface of such tire component. Such tire component may be, for example, at least a portion of a tire sidewall. Such ester, particularly said film, may be, for example, a sorbitan ester, or mixtures thereof, and particularly, for example, sorbitan monostearate.

## Description

### Field of the Invention

A pneumatic rubber tire having at least one visually exposed component comprised of a carbon black reinforced rubber composition which is exclusive of silica particularly synthetic amorphous silica, synthetic organo-silica material and silica coupler particularly organosilane polysulfide based silica coupler and contains a significant amount of at least one ester of a polyhydroxy alcohol, including ethoxylated esters thereof. Such tire component particularly includes a film thereof on the visually observable outer surface of such tire component. Such tire component may be, for example, at least a portion of a tire sidewall. Such ester, particularly said film, may be, for example, a sorbitan ester, or mixtures thereof, and particularly, for example, sorbitan monostearate.

### Background of the Invention

Pneumatic rubber tires conventionally have visually exposed external components of one or more rubber compositions which, when exposed to weathering atmosphere conditions and dynamic use, tend to discolor to various degrees and to provide an external tire appearance which is not typically uniform in nature. For example, a black colored tire sidewall may tend to become brown in color as a result of migration of antidegradants to the surface of the rubber composition, together with exposure to atmospheric ozone, ultraviolet light and weathering in general. Such phenomena are well known to those having skill in such art.

When a tire is initially manufactured, the associated tire molding surface conventionally provides an attractive appearance for the surface of the entire tire.

As the tire naturally ages, or is used, under atmospheric conditions, the appearance of a tire sidewall, for example, conventionally becomes somewhat duller in nature due to atmospheric elements such as exposure to ozone and ultraviolet light.

Also, the visually appearing tire sidewall conventionally often becomes somewhat discolored, due to migration of, for example, rubber processing oil(s), particularly aromatic rubber processing oils, which may be contained within the rubber composition of the tire component, as well as migration of paraffinic or microcrystalline waxes, if used, and to some extent staining antidegradants, if used, to the exposed surface of the rubber composition of a visually exposed component of the tire.

Such tire components having visually exposed surfaces may be, for example, tire sidewalls, tire chafers, and tire treads, or individual portions thereof.

According to this invention, a method is provided for masking, retarding, and possibly essentially eliminating for an extended period of time, such dulling and/or discoloring (usually browning) of the exposed surface of a tire component due to such migration of various ingredients and/or exposure to atmospheric conditions.

It is to be appreciated that this invention is intended to go beyond a simple elimination of one or more offending ingredients, which in and of itself however might result in a degree of reduction of aged degradation of the visible surface of the rubber component, or perhaps preventing the exposure of the tire to atmospheric conditions which in and of itself would be difficult to accomplish.

In practice, this invention relies upon an inclusion of one or more selective additives to one or more components of a tire which have one or more visibly exposed surfaces which have a tendency to migrate to a visible surface of the tire component and, also, to thereby form a film, or barrier, preferably a relatively glossy film, on the visible surface of the tire component.

Such additive(s) are desirably characterized by being relatively incompatible with and by not being easily sulfur curable with elastomers, at least diene-based elastomers, as well as being of a relatively low molecular weight and of a relatively low viscosity.

Such additive(s) are desirably characterized by being both non-polar and polar in nature along the chemical molecule. The non-polar portion of the molecule should exhibit limited compatibility with the diene based elastomers, whereas the polar portion will be somewhat incompatible and tend to migrate to the cured rubber surface.

In practice, it is considered herein that such incompatibility of the polar function of the additive(s), in combination of its relatively low molecular weight, relatively low viscosity, and/or relatively low melting point, enhances its tendency to migrate to the visual surface of the tire component and tend to create a continuous film on the surface which can mask the aforesaid discoloration and/or dullness of the surface caused by migration of other ingredients within the rubber composition to its visible surface and exposure to atmospheric elements.

Accordingly, one aspect of the philosophy of this invention is to create and/or maintain an aesthetically appealing visible surface of a respective tire component over an extended period of time by an inclusion of such selective ingredient(s) in the respective rubber composition of selective tire component(s) which has a tendency to migrate to the visible surface of the tire component to substantially mask the effects of migration of rubber processing oils, staining antidegradants or paraffinic waxes and various microcrystalline waxes and effects of atmospheric aging.

US-A- 6,348,531 reports that it endeavors to improve the processability of a silica rich rubber composition which contains an organo-silane and/or an organo-silane polysulfide coupling agent. The processability of such rubber composition is said to be improved by an addition of a processing aid in a form of an ester of a fatty acid. Such ester is indicated as being, for example, a fatty acid ester of sorbitan selected from, for example, sorbitan stearate, sorbitan monopleate, sorbitan dioleate and sorbitan laurate.

In the description of this invention, the term "phr" where used relates to parts by weight of an ingredient per 100 parts by weight of rubber, unless otherwise indicated.

The terms "rubber" and "elastomer" are used interchangeably unless otherwise indicated. The terms "vulcanized" and "cured" are used interchangeably unless otherwise indicated. The terms "compound" and "rubber composition" may be used interchangeably unless indicated.

### Disclosure and Practice of the Invention

In accordance with this invention, a pneumatic rubber tire is provided having at least one component having a visually observable outer surface comprised of a carbon black rich rubber composition which is exclusive of silica, organo-silane material and organosilane polysulfide material, which comprises, based on 100 parts by weight rubber (phr);
(A) at least one (preferably about 100 phr) diene-based elastomer,
(B) from 20 to 120, alternately 30 to 80, phr of carbon black, and
(C) 0.5 to 20, alternately 1 to 10, phr of at least one carboxylic acid ester of a polyhydroxy alcohol of the general formula (I):

   (I) CH₂OH (CHOH)ₙ CH₂OH
wherein n is an average value in a range of from 1 to 20, alternately from 3 to 6,
wherein said carboxylic acid for said esterification of said alcohol is of the general formula (II):

(II) R―(COOH)

wherein R is a linear, branched, or aromatic chain which contains from 1 to 30, alternately 12 to 20 carbon atoms.

Representative examples of linear carboxylic acids are, for example, stearic, palmitic and oleic acids.

Representative branched carboxylic acids are, for example, isobutyric, isovaleric and isocaproic acids.

Representative aromatic carboxylic acids are, for example, benzoic and toluic acids.

In practice, said tire component may be, for example although not intended to be limited to, at least a portion of a tire sidewall, at least a portion of a tire tread and at least a potion of a tire chafer, which are visible tire components well known to those having skill in such art and preferably at least a portion of a tire sidewall to the exclusion of a tire tread.

In further accordance with this invention, said tire also contains a film of said ester on an outer, visible surface of said tire component.

In particular accordance with this invention said tire contains a film of said ester on an outer, visible surface of said tire component formed by migration thereof from a dispersion thereof within the rubber composition of said component to the outer, visible, rubber surface of said tire component.

In an additional accordance with this invention, said tire contains a film of said ester on an outer, visible surface of said tire component as a result of said ester migration from a dispersion thereof within the rubber composition of said component to the outer, visible, rubber surface of said tire component in a manner to mask an appearance of rubber processing oil contained within the rubber composition of said tire component which has also migrated to a visible surface thereof.

In the practice of this invention, a carbon black rich rubber composition, to the exclusion of containing silica and silane based materials, is used for the visually observable tire component in which the aforesaid ester material migrates to a visible surface of the tire rubber component to form a film on said visible surface (e.g the outer surface of a tire sidewall).

In another aspect of the invention, it is desired that the tire component is at least a portion of the sidewall to the exclusion of the tire tread because a film formed on the outer surface of a tread is readily abraded away as the tire rolls on the ground.

Representative examples of said polyhydroxy alcohols are, for example, sorbitol or mannitol, of which sorbitol is preferred.

Representative examples of said carboxylic acids are, for example, stearic acid, palmitic acid, lauric acid, oleic, capric, myristic, linoleic, cyclohexane carboxylic acid, phenyl acetic acid and benzoic acid, and mixtures thereof, of which stearic acid, palmitic acid, oleic acid and lauric acid, particularly stearic acid, are preferred. In one aspect, such carboxylic acid may be comprised of a mixture of stearic acid, palmitic acid, oleic acid and lauric acid in which the stearic acid is a major (at least 50 weight percent) component of such carboxylic acids.

Accordingly, representative examples of esters of polyhydroxy alcohols are, for example, sorbitol esters as, for example sorbitan monostearate, sorbitan monooleate, sorbitan monoolaurate, sorbitan distearate, sorbitan dioleate and sorbitan dilaurate, and mixtures thereof, with sorbitan monostearate being preferred. In one aspect, such esters may be comprised of a mixture of sorbitan monostearate, sorbitan monolaurate, sorbitan monooleate, and sorbitan dioleate in which sorbitan monostearate is a major (at least 50 percent by weight) of such esters.

In one aspect of the invention, such esters of polyhydroxy alcohols may be in a form of ethoxylated esters of polyhydroxy alcohols. Representative of such ethoxylated esters may be obtained, for example, as Glycosperse™ and Aldosperse™ from Lonza Chemical Company.

While the mechanism may not be entirely understood, it is believed that the polyhydroxy alcohol ester, such as for example, a sorbitan ester (e.g. sorbitan monostearate) migrates to the visual surface of the tire rubber component to form a substantially continuous, film of relatively consistent molecular weight on the sidewall surface to provide the sidewall surface with a somewhat glossy, aesthetically appealing, appearance, particularly for a black colored tire sidewall where the black color is a result of the carbon black contained in the sidewall rubber composition.

For the purposes of this description, the "compounded" rubber compositions refer to the respective rubber compositions which have been compounded with appropriate compounding ingredients such as, for example, carbon black, oil, stearic acid, zinc oxide, wax, antidegradants, resin(s), sulfur and accelerator(s) as well as the aforesaid esters of polyhydroxy alcohols such as the aforesaid sorbitol ester(s), particularly sorbitan monostearate.

In the practice of this invention, the rubber composition of said tire component may be comprised of a diene-based elastomer selected from, for example, polymers and copolymers of at least one of isoprene and 1,3-butadiene and copolymers of styrene and/or alpha methylstyrene with at least one of isoprene and 1,3-butadiene and may include an EPDM rubber (ethylene/propylene/conjugated diene rubber terpolymer).

The selection of elastomers for a particular visible tire component will depend somewhat upon which tire component is involved which may be, for example, a tire sidewall or a portion of a sidewall.

The elastomers for a particular visible tire component may be selected from, for example, one or more of diene-based cis 1,4-polyisoprene rubber (natural or synthetic), cis 1,4-polybutadiene rubber, styrene/butadiene copolymer rubbers (whether prepared by solvent solution or aqueous emulsion polymerization, styrene/isoprene/butadiene terpolymer rubbers, isoprene/butadiene copolymer rubber, high vinyl polybutadiene rubber having a vinyl 1,2-content in a range of from 30 to 90 percent, trans 1,4-polybutadiene rubber and 3,4-polyisoprene rubber. Preferably it is comprised of a combination of natural rubber or synthetic cis 1,4-polyisoprene rubber and cis 1,4-polybutadiene rubbers. It may also be comprised of or contain butyl, halobutyl and/or EPDM (ethylene/propylene/diene monomer terpolymer) rubber as well as brominated paramethylstyrene/isobutylene copolymers.

In practice, the rubber composition may contain a tin and/or silicon coupled, preferably tin coupled, diene-based elastomer prepared by organic solvent polymerization in the presence of a suitable tin-based catalyst complex , or tin based coupling agent, of at least one of isoprene and 1,3-butadiene monomers or of styrene together with at least one of isoprene and 1,3-butadiene monomers. Said tin and/or silicon coupled elastomers may be selected from, for example, styrene/butadiene copolymers, isoprene/butadiene copolymers, styrene/isoprene copolymers and styrene/isoprene/butadiene terpolymers. The preparation of tin and silicon coupled elastomers via organic solvent polymerization is well known to those having skill in such art.

In practice, the rubber composition may contain a functionalized diene-based elastomer. For example, a functionalized elastomer may be provided as a diene-based elastomer as described above which contains one or more functional groups such as, for example, one or more hydroxyl groups, carboxyl groups, silanol groups, amine groups and epoxy groups, which are available to participate in reactions with, for example rubber reinforcing fillers such as, for example, carbon black (actually moieties such as for example minor amounts of carboxyl groups on the surface of carbon black), carbon black which contains domains of silica on its surface, clay (particularly water swellable clay such as for example montmorillonite clay), and starch-based reinforcement. Such functionalized diene-based elastomers, and their preparation, are well known to those having skill in such art.

It is readily understood by those having skill in the art that the rubber compositions of the external tire components would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, resins including tackifying resins, and plasticizers, fatty acid, zinc oxide, waxes, antioxidants and antiozonants, peptizing agents and reinforcing material as the aforementioned carbon black. As known to those skilled in the art, depending on the intended use of the sulfur vulcanizable and sulfur vulcanized material (rubbers), the additives mentioned above are selected and commonly used in conventional amounts.

Typical additions of carbon black may comprise 20 to 120 parts by weight per 100 parts by weight of diene rubber (phr), preferably 30 to 80 phr. Typical amounts of tackifier resins, if used, may comprise 0.5 to 10 phr, usually 1 to 5 phr. Typical amounts of processing aids may comprise 1 to 50 phr. Such processing aids may include aromatic, napthenic, and/or paraffinic processing oils. Typical amounts of antioxidants comprise 1 to 5 phr. Representative antioxidants may be, for example, diphenyl-p-phenylenediamine and others, such as, for example, those disclosed in the Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 6 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide. The presence and relative amounts of the above additives are considered to be not an aspect of the present invention which is more primarily directed to the utilization of specified blends of rubbers in tire external components as sulfur vulcanizable compositions.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, with a range of from 0.5 to 2.25 being preferred.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.0 phr. In another embodiment, combinations of two or more accelerators which the primary accelerator is generally used in the larger amounts, 0.5 to 2 phr, and a secondary accelerator which is generally used in amounts of 0.05 to 0.50 phr in order to activate and to improve the properties of the vulcanizate. Combinations of these accelerators have been known to produce a synergistic effect on the final properties and are somewhat better than those produced by use of either accelerator alone. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not considered to be an aspect of this invention which is more primarily directed to the utilization of specified ingredients to enhance the aesthetic appearance of the visible surface of a tire.

Sometimes, the combination of zinc oxide, fatty acid, sulfur and accelerator(s) may be collectively referred to as curatives.

Sometimes a combination of antioxidants, antiozonants may be collectively referred to as antidegradants.

The tire can be built, shaped, molded and cured by various methods which will be readily apparent to those having skill in such art.

The prepared tire of this invention is conventionally shaped and cured by methods known to those having skill in such art.

The invention may be better understood by reference to the following example in which the parts and percentages are by weight unless otherwise indicated.

### EXAMPLE I

Samples of rubber compositions according to the recipes represented in Table 1 were prepared as being representative sidewall compositions by blending ingredients in a laboratory internal rubber mixer using two separate stages of addition of the ingredients, namely, a first non-productive mix stage and a second productive mix stage where sulfur and accelerator(s) are added.

The Samples are represented in this Example as Control Sample A and Samples B though E. For Samples B through E, sorbitan monostearate is substituted for oil or for oil and wax contained in the Control Sample A.

For the preparation of the Samples, in the first, or non-productive internal mixing stage, the ingredients were mixed for about 4 minutes to a drop temperature of about 150°C. In the second or productive mixing stage, sulfur and accelerator(s) were added and mixed for about 2 minutes to a drop temperature of about 110°C.

The cure behavior and various cured physical properties for each composition are shown in Table 2. The samples were individually cured for 12 minutes at about 170°C.

The results of ozone testing, namely static and dynamic ozone testing, of the cured Samples are shown in the following Tables 3 through 5. The general conditions for the ozone testing of the Samples, whether static or dynamic, in terms of ozone concentration, time and temperature, are recited at the top of the respective Tables 3 through 5.

**Table 1**

| | Control Sample A | Sample B | Sample C | Sample D | Sample E |
|---|---|---|---|---|---|
| Non-Productive Mixing (150°C) | | | | | |
| Natural rubber | 40 | 40 | 40 | 40 | 40 |
| Cis 1,4-polybutadiene¹ | 60 | 60 | 60 | 60 | 60 |
| Carbon black² | 50 | 50 | 50 | 50 | 50 |
| Fatty Acid | 1 | 1 | 1 | 1 | 1 |
| Antiozonant/Antioxidants³ | 5 | 5 | 5 | 5 | 5 |
| Processing oil⁴ | 12 | 10.5 | 9 | 11.5 | 9 |
| Wax⁵ | 1 | 1 | 1 | 0 | 0 |
| Sorbitan monostearate⁶ | 0 | 1.5 | 3 | 1.5 | 4 |
| Phenolic tackifier⁷ | 3.5 | 3.5 | 3.5 | 3.5 | 3.5 |

| Productive Mixing (110°C) | | | | | |
|---|---|---|---|---|---|
| Zinc oxide | 3.5 | 3.5 | 3.5 | 3.5 | 3.5 |
| Sulfur and accelerator(s)⁸ | 2.7 | 2.7 | 2.7 | 2.7 | 2.7 |

| | | | | | |
|---|---|---|---|---|---|
| ¹Obtained as BUD® 1207 from The Goodyear Tire & Rubber Company | | | | | |
| ²ASTM N-550 | | | | | |
| ³Blend of Santoflex™6PPD from Flexsys and Wingstay® 100 from The Goodyear Tire & Rubber Company | | | | | |
| ⁴Flexon™641 from ExxonMobil | | | | | |
| ⁵Blend of microcrystalline and paraffinic waxes, 2/1 weight ratio m/p | | | | | |
| ⁶Glycomul S from Lonza Chemicals | | | | | |
| ⁷SP-1068 from Schenectady | | | | | |
| ⁸Blend of sulfenamide and guanidine based sulfur cure accelerators | | | | | |

**Table 2**

| | Control Sample A | Sample B | Sample C | Sample D | Sample E |
|---|---|---|---|---|---|
| Processing oil | 12 | 10.5 | 9 | 11.5 | 9 |
| Wax | 1 | 1 | 1 | 0 | 0 |
| Sorbitan monostearate | 0 | 1.5 | 3 | 1.5 | 4 |

| Rheometer, 170°C | | | | | |
|---|---|---|---|---|---|
| Maximum torque (dNm) | 10.77 | 10.71 | 10.68 | 10.67 | 11.87 |
| Minimum torque (dNm) | 1.85 | 1.86 | 1.82 | 1.83 | 2.05 |
| Delta torque (dNm) | 8.92 | 8.85 | 8.86 | 8.84 | 9.82 |
| T90 (minutes) | 2.67 | 2.74 | 2.75 | 2.81 | 2.72 |

| Stress-strain | | | | | |
|---|---|---|---|---|---|
| Tensile strength (MPa) | 13.5 | 13.6 | 14 | 14.1 | 13.5 |
| Elongation at break (%) | 596 | 607 | 621 | 627 | 602 |
| 300% modulus (MPa) | 5.1 | 4.9 | 5 | 5 | 5.1 |

| Rebound, % | | | | | |
|---|---|---|---|---|---|
| 23°C | 57 | 58 | 57 | 58 | 56 |
| 100°C | 61 | 61 | 60 | 60 | 62 |

| Hardness (Shore A) | | | | | |
|---|---|---|---|---|---|
| 23°C | 50 | 50 | 51 | 50 | 53 |
| 100°C | 47 | 46 | 46 | 46 | 48 |
| Tear strength, Newtons, (95°C) | 106 | 138 | 134 | 137 | 101 |

**Table 3**

| Static Ozone Test (Ozone 50 pphm, 48 hours, 40°C, Variable Strain) | | | | | |
|---|---|---|---|---|---|
| | Control Sample A | Sample B | Sample C | Sample D | Sample E |
| Number of cracks | ○ | ○ | ○ | ○ | ○ |
| Appearance of Surface | Dull | Slightly shiny | Very shiny | Slightly shiny | Very shiny |
| | Slightly brown | Black | Black | Black | Black |

**Table 4**

| Dynamic Ozone Test (Ozone 50 pphm, 48 hours, 40°C, 60% Strain) | | | | | |
|---|---|---|---|---|---|
| | Control Sample A | Sample B | Sample C | Sample D | Sample E |
| Number of cracks/ size of cracks | D1 | D2 | D2 | D2 | D1 |
| Appearance of Surface | Dull | Slightly shiny | Very shiny | Slightly shiny | Very shiny |
| | Slightly brown | Black | Black | Black | Black |

**Table 5**

| Dynamic Ozone (Pre-Aged) Test (Pre-aged 14 days at 70°C in Air Oven) | | | | | |
|---|---|---|---|---|---|
| | Control Sample A | Sample B | Sample C | Sample D | Sample E |
| Number of cracks size of cracks | A1 | A1 | A2 | A1 | A1 |
| Appearance of Surface | Slightly brown | Black | Black | Black | Black |

The following is the key used to report visual observations of the cracks, if any, on the surface of a respective Sample in the associated Tables:

| Number of Cracks | Size of Cracks |
|---|---|
| O = None | 1 = small (hairline) |
| A = less than 1/4 surface | 2 = medium |
| B = 1/4 to 1/2 surface | 3 = large |
| C = 1/2 to 3/4 surface | 4 = severe (open) |
| D = 3/4 to all surface | |

The results presented in Tables 2 through 5 clearly show the benefit of the presence of sorbitan monostearate in a cured rubber compound after exposure to static or dynamic ozone resistance. In particular, when sorbitan monostearate is used as a replacement for oil or for wax and oil, the tested cured rubber samples (B, C and D) exhibit both a blacker appearance and also a shinier appearance than the Control Sample A. This appearance difference should translate into a better looking tire when sorbitan monostearate is used in one or all of the external components of a cured tire.

It is considered herein that the shinier, blacker appearance of said Samples B, C and D is due to migration of the sorbitan monostearate to the surface of the Samples..

### EXAMPLE II

Samples of rubber compositions according to the recipes represented in Table 6 as representative of sidewall type rubber compositions were prepared by blending ingredients in a laboratory internal rubber mixer using two separate stages of addition of the ingredients, namely a first non-productive mix stage and a second productive mix stage where sulfur and accelerator(s) are added.

The Samples are reported herein as Control Sample F and Samples G through I. For Samples G and H, sorbitan monolaurate was substituted for oil or oil and wax of Control Sample F. For Sample I, sorbitan monooleate was substituted for oil and wax of Control Sample F.

For the preparation of the Samples, in the first, non-productive mixing stage, the ingredients were mixed for about 4 minutes to a drop temperature of about 150°C. In the second or productive mixing stage, the ingredients were mixed for about 2 minutes to a drop temperature of about 110°C. The difference in composition is shown in the following Table 6.

The cure behavior and various cured properties for each Sample are shown in Table 7. Test samples were cured for 12 minutes at 170°C for each compound.

Static and dynamic ozone tests are shown for the cured Samples in the following Tables 8 and 9. The general conditions for the ozone testing of the Samples, whether static or dynamic, in terms of ozone concentration, time and temperature, are recited at the top of the respective Tables 8 and 9.

The results, presented in Tables 8 and 9, clearly show the benefits of the presence of sorbitan monolaurate or sorbitan monoleate in a cured rubber composition after exposure to static or dynamic ozone resistance. When sorbitan monolaurate is used as a replacement for oil (Sample G) or oil and wax (Sample H), the test samples exposed to static or dynamic ozone resistance maintain the original black color better and also become shiny in appearance as compared to the Control Sample F which becomes dull and turns slightly brown. Sample I, which contains sorbitan monooleate, also remains black in color and becomes shiny. These materials also give a somewhat sticky surface in contrast to the sorbitan monostearate, which did not become sticky.

It is considered herein that the shinier, blacker appearance of said Samples G, H and I is due to the migration of these esters to the surface of cured rubber Samples.

**Table 6**

| | Control Sample F | Sample G | Sample H | Sample I |
|---|---|---|---|---|
| Non-Productive Mixing (150°C) | | | | |
| Natural rubber | 40 | 40 | 40 | 40 |
| Cis 1,4-polybutadiene¹ | 60 | 60 | 60 | 60 |
| Carbon black² | 50 | 50 | 50 | 50 |
| Fatty Acid | 1 | 1 | 1 | 1 |
| Antiozonant/antioxidant³ | 5 | 5 | 5 | 5 |
| Processing oil⁴ | 13 | 10 | 10 | 10 |
| Wax⁵ | 1 | 1 | 0 | 0.7 |
| Sorbitan monolaurate⁶ | 0 | 3 | 4 | 0 |
| Sorbitan monooleate⁷ | 0 | 0 | 0 | 3.3 |
| Phenolic tackifier⁸ | 3.5 | 3.5 | 3.5 | 3.5 |

| Second Productive Mixing (110°C) | | | | |
|---|---|---|---|---|
| Zinc oxide | 3.5 | 3.5 | 3.5 | 3.5 |
| Sulfur and accelerators⁹ | 2.5 | 2.5 | 2.5 | 2.5 |

| | | | | |
|---|---|---|---|---|
| ¹Obtained as BUD® 1207 from The Goodyear Tire & Rubber Company | | | | |
| ²ASTM N-550 | | | | |
| ³Blend of Santoflex™6PPD from Flexsys and Wingstay® 100 from The Goodyear Tire & Rubber Company | | | | |
| ⁴Flexon™641 from ExxonMobil | | | | |
| ⁵Blend of microcrystalline and paraffinic waxes, 2/1 weight ratio m/p | | | | |
| ⁶Glycomul™L from Lonza Chemicals | | | | |
| ⁷Glycomul™O from Lonza Chemicals | | | | |
| ⁸SP-1068 from Schenectady | | | | |
| ⁹Blend of sulfenamide and guanidine based sulfur cure accelerators | | | | |

**Table 7**

| | Control Sample F | Sample G | Sample H | Sample I |
|---|---|---|---|---|
| Processing oil | 13 | 10 | 10 | 10 |
| Wax | 1 | 1 | 0 | 0.7 |
| Sorbitan monolaurate | 0 | 3 | 4 | 0 |
| Sorbitan monooleate | 0 | 0 | 0 | 3.3 |

| Rheometer, 170°C | | | | |
|---|---|---|---|---|
| Maximum torque (dNm) | 9.75 | 9.86 | 10.25 | 9.76 |
| Minimum torque (dNm) | 1.87 | 1.97 | 1.95 | 1.93 |
| Delta torque (dNm) | 7.88 | 7.89 | 8.3 | 7.86 |
| T90 (minutes) | 3.53 | 3.1 | 2.94 | 3.27 |

| Stress-strain | | | | |
|---|---|---|---|---|
| Tensile strength (MPa) | 12.2 | 12.4 | 11.9 | 12.8 |
| Elongation at break | 619 | 653 | 612 | 648 |
| 300% modulus (MPa) | 4.3 | 4 | 4.2 | 4.1 |

| Rebound, % | | | | |
|---|---|---|---|---|
| 23°C | 56 | 54 | 53 | 55 |
| 100°C | 59 | 58 | 58 | 59 |

| Hardness (Shore A) | | | | |
|---|---|---|---|---|
| 23°C | 48 | 47 | 48 | 50 |
| 100°C | 45 | 44 | 45 | 47 |
| Tear strength, N (95°C) | 105 | 96 | 133 | 181 |

**Table 8**

| Static Ozone Test (Ozone 50 pphm, 48 hours, 40°C, Variable Strain) | | | | |
|---|---|---|---|---|
| | Control Sample F | Sample G | Sample H | Sample I |
| Number of cracks | ○ | ○ | ○ | ○ |
| Appearance of Surface | Dull | Shiny/ Sticky | Shiny/ Very Shiny | Shiny/ Very Shiny |
| | Slightly brown | Black | Black | Black |

**Table 9**

| Dynamic Ozone Test (Ozone 50 pphm, 48 hours, 40°C, 60% Strain) | | | | |
|---|---|---|---|---|
| | Control Sample F | Sample G | Sample H | Sample I |
| Number of cracks size of cracks | D1 | D1 | D1 | D1 |
| Appearance of Surface | Dull | Dull | Slightly shiny | Slightly shiny |
| | Slightly brown | Black | Black | Black |

### EXAMPLE III

Samples of rubber compositions according to the recipes represented in Table 10 were prepared by blending ingredients in a laboratory internal rubber mixer using two separate stages of addition of the ingredients, namely a first non-productive mix stage followed by a productive mix stage.

The Samples are reported herein as Control Sample J and Samples K through M. In Sample K, sorbitan monostearate replaces wax. In Sample L, sorbitan monostearate replaces oil and wax. In Sample M, sorbitan monostearate replaces oil of Control Sample J.

For the preparation of the Samples, in the first, non-productive mixing stage, the ingredients were mixed for about 4 minutes to a drop temperature of about 150°C. In the second productive mix stage, the ingredients were mixed for about 2 minutes to a drop temperature of about 110°C.

The cure behavior and various cured properties for each composition are shown in Table 11. Test samples were cured for 14 minutes at 160°C. The cured samples show the benefit as to appearance for the presence of sorbitan monostearate. The cure behavior and cured properties are similar for all compounds. The appearances of the respective cured Samples is reported in the following Table 12.

**Table 10**

| | Control Sample J | Sample K | Sample L | Sample M |
|---|---|---|---|---|
| Non-Productive Mixing (150°C) | | | | |
| Emulsion SBR¹ | 96.25 | 96.25 | 96.25 | 96.25 |
| Polybutadiene² | 37.5 | 37.5 | 37.5 | 37.5 |
| Waxes³ | 3.8 | 0 | 0 | 3.8 |
| Processing oil⁴ | 12 | 12 | 10.8 | 8.2 |
| Zinc oxide | 4 | 4 | 4 | 4 |
| atty acid | 2 | 2 | 2 | 2 |
| Carbon black⁵ | 90 | 90 | 90 | 90 |
| Antioxidant/antizonant⁶ | 2.5 | 2.5 | 2.5 | 2.5 |
| Sorbitan monostearate | 0 | 3.8 | 5 | 3.8 |

| Second Productive Mixing (110°C) | | | | |
|---|---|---|---|---|
| Sulfur and accelerators⁷ | 4.6 | 4.6 | 4.6 | 4.6 |

| | | | | |
|---|---|---|---|---|
| ¹Obtained as PLF® 1712 from The Goodyear Tire & Rubber Company, 23.5 percent bound styrene, 50 Mooney, contains 37.5 phr aromatic oil | | | | |
| ²Obtained as BUD® 1254 from The Goodyear Tire & Rubber Company, 50 Mooney, contains 20 phr aromatic oil | | | | |
| ³Blend of microcrystalline and paraffinic | | | | |
| ⁴Sundex™ 8125 obtained from Sun Oil | | | | |
| ⁵ASTM- N205 | | | | |
| ⁶Blend of Santoflex™ 6PPD from Flexsys and Wingstay® 100 from The Goodyear Tire & Rubber Company | | | | |
| ⁷Blend of sulfur with sulfenamide and thiuram based sulfur cure accelerators | | | | |

**Table 11**

| | Control Sample J | Sample K | Sample L | Sample M |
|---|---|---|---|---|
| Processing oil | 12 | 12 | 10.8 | 8.2 |
| Wax | 3.8 | 0 | 0 | 3.8 |
| Sorbitan monostearate | 0 | 3.8 | 5 | 3.8 |

| Rheometer, 160°C | | | | |
|---|---|---|---|---|
| Maximum torque (dNm) | 16.6 | 16.8 | 16.7 | 16.8 |
| Minimum torque (dNm) | 3.4 | 3.5 | 3.5 | 3.2 |
| Delta torque (dNm) | 13.2 | 13.3 | 13.2 | 13.6 |
| T90 (minutes) | 5.9 | 5 | 4.8 | 5 |

| Stress-strain | | | | |
|---|---|---|---|---|
| Tensile strength (MPa) | 15.9 | 15.7 | 16.2 | 16.0 |
| Elongation at break (%) | 560 | 559 | 570 | 562 |
| 300% modulus (MPa) | 7.1 | 6.9 | 7.0 | 7.1 |

| Rebound, % | | | | |
|---|---|---|---|---|
| 23°C | 25 | 25 | 25 | 25 |
| 100°C | 40 | 40 | 39 | 41 |

| Hardness (Shore A) | | | | |
|---|---|---|---|---|
| 23°C | 72 | 70 | 68 | 69 |
| 100°C | 58 | 56 | 56 | 57 |
| Tear strength, N (95°C) | 198 | 198 | 219 | 196 |
| DIN abrasion (relative volume loss)¹ | 105 | 105 | 109 | 109 |

| | | | | |
|---|---|---|---|---|
| ¹The relative volume loss is normalized to a value of 100. A lower value reflects less volume loss which is preferred as reporting a greater resistance to abrasion and indicative of greater tread wear, other things being equal, for a tire having a tread of such rubber composition. | | | | |

**Table 12**

| Surface Appearance of Cured Samples, No Ozone Test | | | | |
|---|---|---|---|---|
| | Control Sample J | Sample K | Sample L | Sample M |
| Cured Samples | Dull | Slightly shiny | Very shiny | Slightly shiny |
| | Black | Black | Black | Black |

## Claims

1. A pneumatic rubber tire is **characterized by** having at least one component having a visually observable outer surface comprised of a carbon black rich rubber composition which is exclusive of silica, organo-silane material and organosilane polysulfide material, which comprises, based on 100 parts by weight rubber (phr);
(A) at least one diene-based elastomer,
(B) from 20 to 120 phr of carbon black, and
(C) from 0.5 to 20 phr of at least one carboxylic acid ester of a polyhydroxy alcohol of the general formula (I):
(I) CH₂OH (CHOH)ₙ CH₂OH
wherein n is an average value in a range of from 1 to 20,
wherein said carboxylic acid for said esterification of said alcohol is of the general formula (II):
(II) R―(COOH)
wherein R is selected from a linear, branched, or aromatic chain which contains from 1 to 30 carbon atoms.

2. The tire of claim 1 wherein said tire component also contains a film of said carboxylic acid ester on an outer, visible surface thereof formed by migration of said carboxylic acid ester from its dispersion in the rubber composition of said component to the outer, visible, rubber surface of said tire component.

3. The tire of claim1 wherein said tire component also contains a film of said ester on an outer, visible surface of said tire component formed by migration of said ester from its dispersion in said rubber composition to the outer, visible, rubber surface thereof in a manner to mask an appearance of rubber processing oil or staining antidegradants contained within the rubber composition of said tire component which has also migrated to a visible surface thereof.

4. The tire of any of the preceding claims wherein said polyhydroxy alcohols are selected from sorbitol and mannitol, and mixtures thereof.

5. The tire of any of the preceding claims wherein said polyhydroxyl alcohol is sorbitol.

6. The tire of any of the preceding claims wherein said carboxylic acid is selected from stearic acid, palmitic acid, lauric acid, oleic, capric, myristic, linoleic, cyclohexane carboxylic acid, phenyl acetic acid and benzoic acid, and mixtures thereof.

7. The tire of any of the preceding claims 1 through 5 wherein said carboxylic acid is comprised of a mixture of stearic acid, palmitic acid, oleic acid and lauric acid in which the stearic acid is a major component of such mixture.

8. The tire of claim 1 wherein said ester of polyhydroxy alcohol is comprised of sorbitan monostearate.

9. The tire of any of the preceding claims wherein said tire component is selected from at least one of at least a portion of a tire sidewall, at least a portion of a tire tread and at least a portion of a tire chafer.

10. The tire of any of the preceding claims 1 through 8 wherein said tire component is at least a portion of a tire sidewall to the exclusion of a tire tread.
